# EUROPEAN PATENT APPLICATION

(11) **EP 4 671 617 A1**
(43) Date of publication of application: **31.12.2025**
(21) Application number: 24183959.6
(22) Date of filing: 24.06.2024
(51) Int. Cl.: F24C 15/08, B64D 11/04, B32B 3/26, B32B 15/01

(54) **OUTER COVER FOR AN AIRCRAFT OVEN**

(71) Applicant: B/E Aerospace, Inc., Winston Salem, NC 27105 (US)
(72) Inventor: PANJER, Frederik A.S., 3953BW Maarsbergen (NL)
(74) Representative: Dehns

(57) **Abstract**

An outer cover (20) for an aircraft oven is provided. The outer cover (20) includes at least one surface (201), at least one cut-out (210) provided in the at least one surface (201), and at least one covering (310) configured to cover the at least one cut-out (210).

## Description

### TECHNICAL FIELD

This disclosure relates to aircraft ovens and, in particular, an outer cover for an aircraft oven.

### BACKGROUND

Aircraft ovens (e.g. galley insert ovens) are usually provided with a complete metal outer enclosure. The metal outer enclosure prevents exposure of the internal insulation blankets to the outside environment. The aircraft oven, including the metal outer enclosure, can be heavy and cumbersome.

### SUMMARY

In one aspect, an outer cover for an aircraft oven is provided. The outer cover comprises at least one surface, at least one cut-out provided in the at least one surface, and at least one covering configured to cover the at least one cut-out.

The at least one covering may be formed from foil. The at least one covering may include an adhesive layer configured to bond with the at least one surface. The adhesive layer may be one of, or a combination of, epoxy, silicone and/or acrylic.

The at least one cut-out may be circular. The at least one covering may be circular.

In another aspect, there is provided a method. The method comprises providing at least one cut-out in at least one surface of an outer cover for an aircraft oven, and covering the at least one cut-out with at least one covering.

The at least one covering may be formed from foil.

The method may further comprise, providing an adhesive layer on the at least one covering, and bonding the at least one covering with the at least one surface. The adhesive layer may be one of, or a combination of, epoxy, silicone and/or acrylic.

The at least one cut-out may be circular. The at least one covering may be circular.

### BRIEF DESCRIPTION OF THE DRAWINGS

Figure 1 shows an example of a known outer cover for an aircraft oven.
Figure 2 shows a side view of an outer cover for an aircraft oven.
Figure 3A shows a cross-section of the side view of the outer cover for an aircraft oven.
Figure 3B shows an example of a covering to be used with the outer cover.

### DETAILED DESCRIPTION

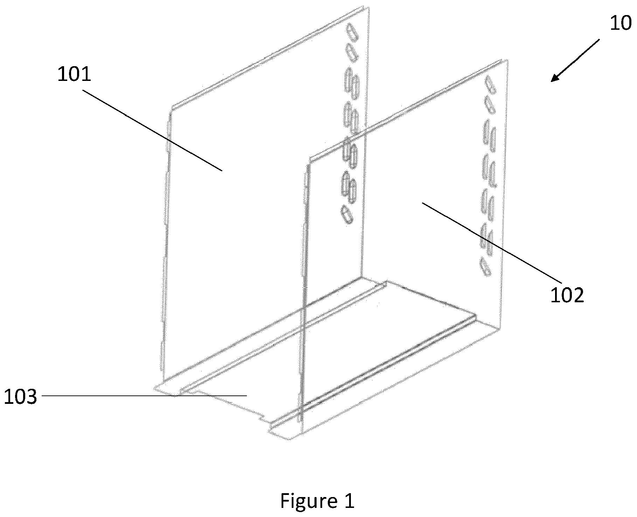

Figure 1 shows, in general, an outer cover 10 for an aircraft oven. The outer cover 10 includes a first surface 101, a second surface 102, and a third surface 103 extending between the first surface 101 and the second surface 102. The outer cover 10 shown in Figure 1 is a metal enclosure that is configured to receive an aircraft oven (e.g. galley insert oven). For example, the first surface 101, the second surface 102 and the third surface 103 are formed from metal. This can be relatively heavy and cumbersome for installation and maintenance.

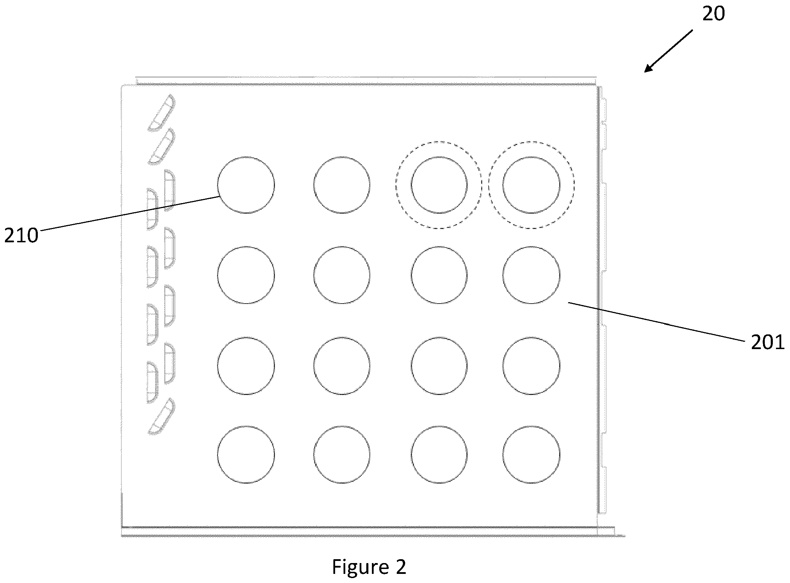

Figure 2 shows, generally, an outer cover 20 for an aircraft oven. The outer cover 20 includes at least one surface 210. Although only one surface is represented in Figure 2, it is to be understood that the outer cover 20 could include a first surface, a second surface and a third surface, as with the outer cover 10 of Figure 1. It is also to be understood that there may be more than three surfaces. It is also envisaged that the at least one surface 201 depicted in Figure 2 can be applied to any of the surfaces shown in Figure 1.

As shown in Figure 2, the at least one surface 201 includes at least one cut-out 210. Although the at least one cut-out 210 is shown as circular, it is envisaged that the at least one cut-out 210 could be any shape (e.g. square, rectangular, triangular etc.). Further, in Figure 2, sixteen cut-outs are shown, but it is to be understood that any number of cut-outs could be provided in the at least one surface 201.

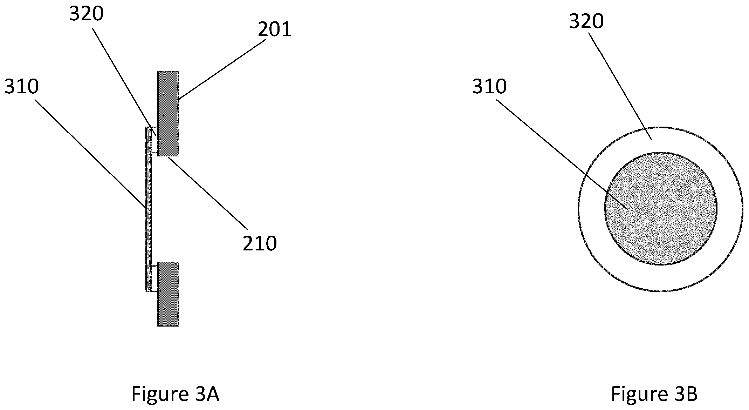

Referring now to Figures 3A and 3B, a covering 310 is shown. The covering 310 is intended to be placed on the at least one surface 201 to cover the at least one cut-out 210, as shown, for example, in Figure 3A. The covering 310 may be formed from foil (e.g. tin foil, aluminium foil, copper foil, or any other foil material known in the art). The covering 310 may include an adhesive layer 320. The adhesive layer may be formed from epoxy, silicone, acrylic or any other known adhesive material. The adhesive layer 320 is provided on the covering 310 such that the covering 310 may be placed over the at least one cut-out 210. Therefore, the outer cover 20 (as shown in Figure 2) has the same benefit of the outer cover 10 (as shown in Figure 1) of preventing exposure of the internal insulation blankets to the outside environment.

As shown in Figure 3B, the covering 310 and adhesive layer 320 may be circular and the adhesive layer 320 may be provided on the circumference of the covering 310. It is to be understood that the covering could be shaped in any form that matches the shape of the cut-out provided in the surface (e.g. square, rectangular, triangular etc.). The adhesive layer 320 may be positioned anywhere on the covering 310 to ensure that the adhesive layer 320 bonds with the surface such that the covering 310 covers the cut-out 210.

One benefit of the outer cover 20 having at least one cut-out 210, and the covering 310 described above, is that the weight of the outer cover 20 can be reduced and, in some instances, the weight can be reduced by between 200-250g. In a typical aircraft, there may be twenty ovens and, therefore, with the arrangement described herein, the total weight saving per aircraft could be around 5kg. Further, the at least one covering 310 can be easily attached to the outer cover 20 making manufacture of the lighter weight outer cover 20 efficient and fast. The covering 310 can also be easily replaced when a cover 310 has been damaged or needs replacing through wear and tear.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. An outer cover (20) for an aircraft oven, the outer cover (20) comprising:
at least one surface (201);
at least one cut-out (210) provided in the at least one surface (201); and
at least one covering (310) configured to cover the at least one cut-out (210).

2. The outer cover of claim 1, wherein the at least one covering is formed from foil.

3. The outer cover of claim 1 or 2, wherein the at least one covering (310) includes an adhesive layer (320) configured to bond with the at least one surface (201).

4. The outer cover of claim 3, wherein the adhesive layer (320) is one of, or a combination of, epoxy, silicone and/or acrylic.

5. The outer cover of any preceding claim, wherein the at least one cut-out (210) is circular.

6. The outer cover of claim 5, wherein the at least one covering (310) is circular.

7. A method, the method comprising:
providing at least one cut-out (210) in at least one surface (201) of an outer cover (20) for an aircraft oven;
covering the at least one cut-out (210) with at least one covering (310).

8. The method of claim 7, wherein the at least one covering (310) is formed from foil.

9. The method of claim 7 or 8, wherein the method further comprises:
providing an adhesive layer (320) on the at least one covering (310); and
bonding the at least one covering (310) with the at least one surface (201).

10. The method of claim 9, wherein the adhesive layer (320) is one of, or a combination of, epoxy, silicone and/or acrylic.

11. The method of any of claims 7-10, wherein the at least one cut-out (210) is circular.

12. The method of claim 11, wherein the at least one covering (310) is circular.
